# EUROPÄISCHE PATENTSCHRIFT

(11) **EP 0 514 783 B1**
(45) Veröffentlichungstag und Bekanntmachung des Hinweises auf die Patenterteilung: **14.02.1996**
(21) Anmeldenummer: 92108215.2
(22) Anmeldetag: 15.05.1992
(51) Int. Cl.: B65H 31/30, B65G 47/82

(54) **Vorrichtung zum Fördern von Papierbogenstapeln**
Device for the transport of stacks of paper sheets
Dispositif pour transporter des piles de feuilles en papier

(30) Priorität: 24.05.1991 DE 4116969
(43) Veröffentlichungstag der Anmeldung: 25.11.1992
(73) Patentinhaber: E.C.H. Will GmbH (HRB 51 057), D-22529 Hamburg (DE)
(72) Erfinder: Kröger, Holger, W-2000 Norderstedt (DE); Wolf, Wolfram, W-2081 Bilsen (DE)
(74) Vertreter: Hiss, Ludwig, Pat. Ass. Dipl.-Ing.

(56) Entgegenhaltungen:
- EP-A- 0 029 614
- BE-A- 535 821
- DE-A- 2 708 131
- GB-A- 1 077 421

## Beschreibung

Die Erfindung betrifft eine Vorrichtung zum Überführen von Papierbogenstapeln von einer Bereitstellungsstation zu wenigstens zwei Abförderern, gemäß dem Oberbegriff des Anspruchs 1.

Wenn im hier vorliegenden Zusammenhang der Einfachheit halber von Papierbogen und Papierbogenstapeln die Rede ist, so heißt das nicht, daß die Erfindung auf Bogen und Stapel aus Papier beschränkt ist. Sie umfaßt vielmehr auch Bogen und Stapel aus anderen Materialien wie Pappe, Karton, Kunststoff und dergleichen.

Papierbogenstapel werden gewöhnlich mehrbahnig bzw. mehrnutzig aus einer breiten Papierbahn hergestellt. Die breite Papierbahn wird dazu von einer Rolle abgerollt und in aufeinanderfolgenden Arbeitsvorgängen wie Längsschneiden und Querschneiden zu Bogen verarbeitet, die in mehreren Bahnen nebeneinander aufeinanderfolgend oder in einem geschuppten Strom in eine Sammelstation gefördert werden, wo die Bogen jeder Reihe jeweils zu nebeneinanderliegenden Stapeln angesammelt werden. Mit einem Transfermittel werden die Stapel dann aus der Sammelstation entnommen und an einen oder mehrere Beschickungsförderer übergeben, die sie zum Verpacken zu wenigstens einer angeschlossenen Packmaschine fördern.

Durch die DE-OS 27 08 131 ist eine Vorrichtung der eingangs beschriebenen Art bekannt. Dort sind an eine Produktionseinrichtung zwei Packmaschinen angeschlossen, die über zwei Beschickungsförderer mit der Produktionseinrichtung verbunden sind. Die Produktionseinrichtung gibt in einer Reihe acht Stapel ab, von denen vier auf den einen und vier auf den anderen Beschickungsförderer überführt werden. Fällt eine Packmaschine aus, so werden die Stapel vom zugehörigen Beschickungsförderer zu dem der anderen Packmaschine umgeleitet. Dazu ist eine ziemlich komplizierte und aufwendige Quertransporteinrichtung vorgesehen.

Der Erfindung liegt die Aufgabe zugrunde eine Vorrichtung der eingangs beschriebenen Art weiter zu verbessern. Gelöst wird diese Aufgabe gemäß der Erfindung mit den im Kennzeichen des Anspruchs 1 angegebenen Mitteln und Maßnahmen. Damit ergibt sich gemäß der Erfindung eine sehr flexible Transfereinrichtung, die die Stapel in jedem beliebigen Zahlenverhältnis aus der Bereitstellungsstation entnehmen und auf die Abförderer verteilen kann.

Weitere Fortführungen und vorteilhafte Ausgestaltungen der Erfindung sind in den Unteransprüchen enthalten. Dabei betreffen die Ansprüche 2 bis 6 eine bevorzugte Ausführung und Anordnung der Abförderer. Dabei enthält Anspruch 4 Merkmale einer derzeit bevorzugten Anordnung der Abförderer relativ zu den Fördermitteln. Die Ansprüche 5 und 6 betreffen eine Weiterbildung der Erfindung, die eine besonders vorteilhafte Ausbildung der Abförderer im Bereich der Transfereinrichtung darstellt. Die Aufteilung eines jeden Abförderers in einen Zwischenförderer und einen Abgabeförderer ermöglicht einen problemlosen Übergang vom diskontinuierlichen Betrieb der Transfereinrichtung zum kontinuierlichen Betrieb der Beschickungsförderer. Die Ansprüche 7 bis 10 geben bevorzugte Ausführungen der Transfereinrichtung mit mehreren Zangenwagen an, die jeweils mehrere Zangen zum Ergreifen der Stapel in der Bereitstellungsstation aufweisen. Diese Ausführungen sind konstruktiv und steuerungstechnisch sehr einfach und erlauben dennoch eine flexible Verteilung der Stapel auf die Abförderer. Die Ansprüche 12 und 13 beziehen sich auf die Anordnung der Transfereinrichtung in einer Produktionseinrichtung zum Herstellen und Verpacken von Papierstapeln oder Stapeln aus anderem Material.

Die Erfindung bietet den Vorteil, daß die Stapel aus einer mehrnutzigen Produktionseinrichtung mit einer platzsparenden Anordnung sehr flexibel auf zwei oder mehr Beschickungsförderer aufgeteilt werden. Je nach Bedarf und Anforderung ist es möglich, die Stapel in ganz unterschiedlichen Zahlenverhältnissen auf die Beschickungsförderer zu verteilen. Dabei können die Zahlenverhältnisse auch unmittelbar und schnell verändert werden. Das eröffnet die sehr vorteilhafte Möglichkeit, flexibel auf Störungen der angeschlossenen Maschinen zu reagieren und die Stapel so zu lenken, daß ihre zuverlässige Weiterverarbeitung und die Aufrechterhaltung des Betriebs der Produktionseinrichtung immer gesichert sind, auch wenn eine Packmaschine ausfällt.

Die Erfindung wird nun anhand der Zeichnung näher erläutert. Es zeigen:
- Fig. 1: in schematischer Darstellung eine Draufsicht auf ein Ausführungsbeispiel der Vorrichtung nach der Erfindung,
- Fig. 2: eine Schnittansicht in Richtung der Pfeile A-B der Figur 1,
- Fig. 3: eine Draufsicht auf die Vorrichtung nach Figur 1 in einer anderen Betriebsphase,
- Fig. 4: eine Draufsicht auf die Vorrichtung nach Figur 1 in einer weiteren Betriebsphase und
- Fig. 5: eine Draufsicht auf ein anderes Ausführungsbeispiel der Vorrichtung nach der Erfindung.

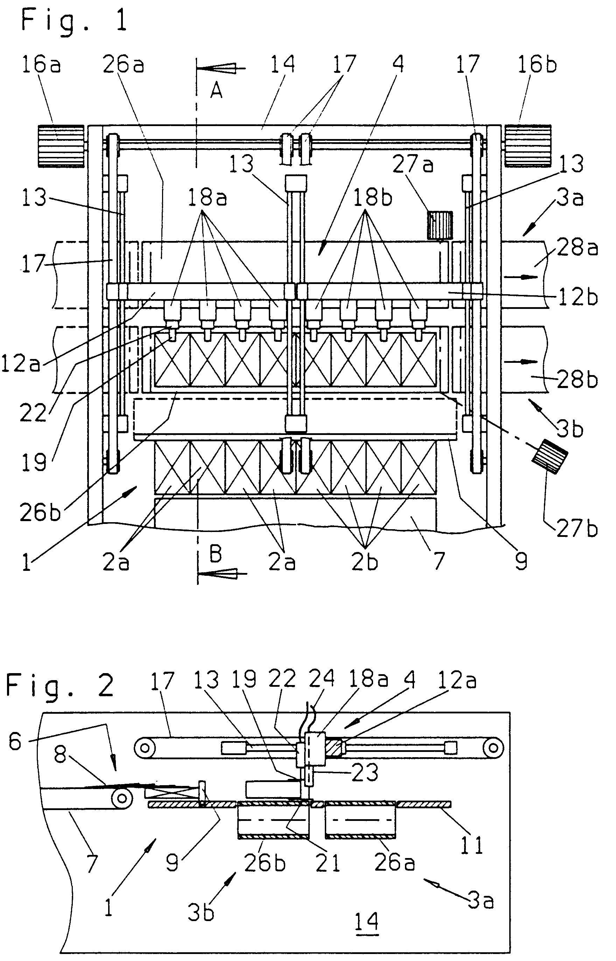

Figur 1 zeigt eine Transfereinrichtung gemäß der Erfindung in einer schematischen Draufsicht, Figur 2 eine Schnittansicht derselben Vorrichtung in Richtung der Pfeile A-B der Figur 1.

Die in der Zeichnung dargestellte Überführungsvorrichtung weist eine Bereitstellungsstation 1 für zu überführende Stapel 2a und 2b, zwei Abförderer 3a und 3b und ein Transfermittel 4 zum Überführen der Stapel 2a und 2b aus der Bereitstellungsstation 1 auf die Abförderer 3a und 3b auf. Die Bereitstellungsstation 1 ist als mehrnutzige Stapelstation ausgebildet, in welcher aus nebeneinander in geschuppten Strömen 6 mittels Bandförderern 7 zugeführten Bogen 8 die Stapel 2a und 2b gebildet werden. Zur Stapelbildung laufen die Bogen 8 gegen einen Anschlag 9, der zum Entfernen der Stapel aus der Bereitstellungsstation in die Förderebene 11 weggeklappt werden kann, was in Figur 1 gestrichelt angedeutet ist. Dieser Vorgang der Stapelbildung ist an sich bekannt und bedarf hier deswegen keiner näheren Schilderung.

Das Transfermittel 4 weist im dargestellten Fall zwei Zangenwagen 12a und 12b auf, die in seitlichen Führungen geführt und zwischen der Bereitstellungsstation 1 und einer Abgabeposition im Bereich der Abförderer 3a und 3b hin und her bewegbar sind. Als seitliche Führungen sind Führungsstangen 13 vorgesehen, die am Maschinenrahmen 14 befestigt sind und in der Förderrichtung der Bänder 7 der ersten Fördereinrichtung verlaufen. Die Zangen wagen 12a und 12b sind mittels Motoren 16a und b über Zahnriementriebe 17 getrennt voneinander antreibbar.

Jeder Zangenwagen 12a,12b trägt beim gezeigten Ausführungsbeispiel der Erfindung mehrere Zangen 18a bzw. 18b. Die Zangen weisen zum Erfassen der Papierstapel jeweils eine Oberbacke 19 und eine Unterbacke 21 auf, die relativ zueinander mittels Betätigungsmitteln 22 und 23 bewegbar sind. Als Betätigungsmittel 22 und 23 können pneumatische oder hydraulische Organe vorgesehen sein, die über in einem Schleppkabel zusammengefaßte Leitungen 24 betätigt werden können.

Die Abförderer 3a und 3b weisen jeweils mehrere aufeinanderfolgende Förderer auf. Im Bereich der Abgabepositionen des Transfermittels 4 sind Zwischenförderer 26a und 26b angeordnet und mittels Motoren 27a und b getrennt antreibbar. An diese Zwischenförderer 26a und 26b schließen sich in Förderrichtung zur angeschlossenen Weiterverarbeitungsmaschine hin Abgabeförderer 28a und 28b an, die ihrerseits wieder aus mehreren aufeinanderfolgenden Förderern bestehen können. Im dargestellten Ausführungsbeispiel sind als Förderer Bandförderer vorgesehen, von deren Umlenkrollen nur die Achsen strichpunktiert angedeutet sind. Wie in der Zeichnung gestrichelt angedeutet, können die Abgabeförderer 28a und 28b auch zur anderen Seite hin oder zu beiden Seiten hin ausgerichtet angeordnet sein.

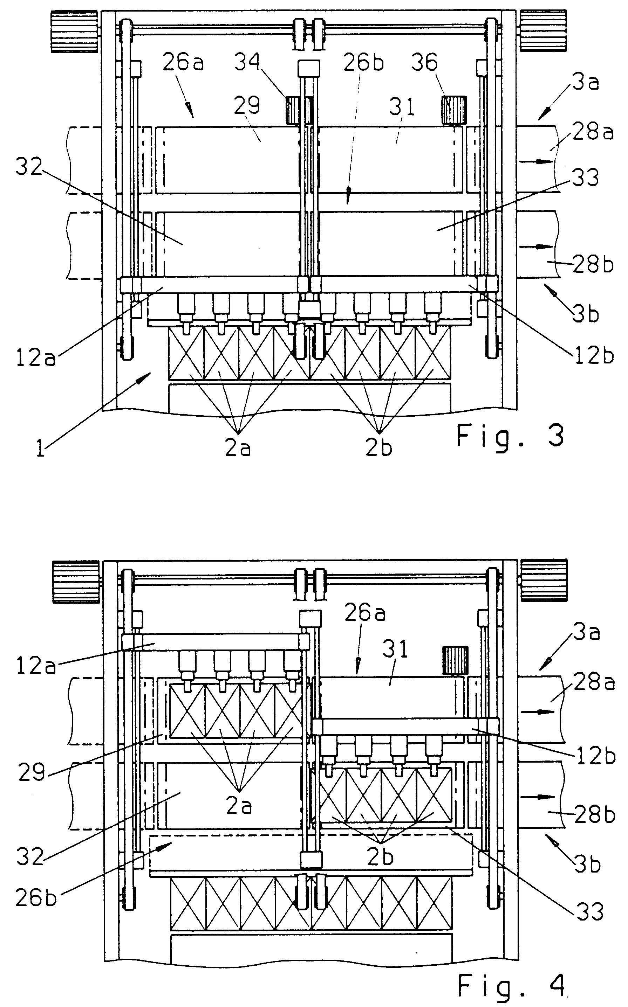

Zur Beschreibung der Funktionsweise der Vorrichtung wird insbesondere auf die Figuren 1 bis 4 Bezug genommen, die unterschiedliche Betriebsphasen der Vorrichtung darstellen. Dabei sind in den Figuren für gleiche Teile dieselben Bezugszeichen verwendet. Da die Vorrichtungen im wesentlichen identisch sind, wird im Zusammenhang mit den Figuren 3 und 4 nur noch auf eventuell bestehende Unterschiede hingewiesen.

In Figur 1 ist das Transfermittel 4 so gesteuert, daß die beiden Zangenwagen 12a und 12b alle Stapel aus der Bereitstellungsstation 1 auf einen einzigen Abförderer überführen, und zwar im dargestellten Fall auf den Zwischenförderer 26 b des Abförderers 3b. Während der Überführung der Stapel aus der Bereitstellungsstation 1 steht der Zwischenförderer 26b still. Sobald die Zangen 18a und 18b der Zangenwagen 12a und 12b die Stapel auf den Zwischenförderer 26b abgelegt haben, wird dieser mittels des Motors 27b mit einer Geschwindigkeit in Bewegung gesetzt, die der Geschwindigkeit des kontinuierlich umlaufenden Abgabeförderers 28b wenigstens angenähert gleich ist. Dadurch werden die Stapel nacheinander ohne Störung ihrer Konfiguration auf den Abgabeförderer 28b übergeben. Anschließend fahren die Zangenwagen 12a und 12b, angetrieben über die Riementriebe 17 von den Motoren 16a und 16b, zur Bereitstellungsstation 1, um die nächsten Stapel zu übernehmen. Der Zwischenförderer 26b ist inzwischen nach Abgabe des letzten Stapels an den Abgabeförderer 28b wieder stillgesetzt.

Figur 3 zeigt beide Zangenwagen 12a und 12b in ihrer Übernahmeposition, in welcher sie in der Bereitstellungsstation 1 bereitliegende fertige Stapel 2a und 2b übernehmen. Im hier gezeigten Ausführungsbeispiel sind die Zwischenförderer 26a und 26b zweiteilig ausgeführt und jeder Fördererteil 29 und 31 bzw. 32 und 33 ist separat angetrieben. Der Antrieb des Fördererteils 29 erfolgt mit einem Motor 34 und der Antrieb des Fördererteils 31 mit einem Motor 36. Die Motoren der Fördererteile 32 und 33 sind der besseren Übersichtlichkeit halber nicht dargestellt. Die Förderrichtung der Zwischenförderer 26a und 26b und ihrer Fördererteile kann entsprechend den angeschlossenen Abförderern frei gewählt werden. Im gezeigten Ausführungsbeispiel fördern beide Abförderer 3a und 3b nach rechts, wozu die Abgabeförderer 28a und 28b in Pfeilrichtung umlaufen. In der Betriebsphase der Figur 3, in welcher sich die Zangenwagen in der Übernahmeposition im Bereich der Bereitstellungsstation 1 befinden, stehen die Zwischenförderer 26a und 26b still, während die Abgabeförderer 28a und 28b in Betrieb sind.

Figur 4 zeigt, daß jeder Zangenwagen 12a und 12b die von ihm aufgenommenen Stapel 2a bzw. 2b auf einen anderen Abförderer 3a bzw. 3b überführt. Dabei legt der Zangenwagen 12a die von ihm aufgenommenen Stapel 2a auf den Teilförderer 29 des Zwischenförderers 26a ab, während dieser stillsteht. Der Teilförderer 31 des Zwischenförderers 26a läuft währenddessen mit der Umlaufgeschwindigkeit des Abgabeförderers 28a um. Der Zangenwagen 12b überführt in gleicher Weise die aufgenommenen Stapel 2b auf den Teilförderer 33 des Zwischenförderers 26b. Der Teilförderer 33 steht während dieser Operation still. Sobald die Stapel von den Zangenwagen 12a und 12b auf die Teilförderer 29 und 33 abgelegt sind, werden diese in Bewegung gesetzt, so daß die Stapel 2a auf den kontinuierlich umlaufenden Teilförderer 31 und weiter auf den Abgabeförderer 28a und die Stapel 2b unmittelbar auf den Abgabeförderer 28b gelangen. Der Teilförderer 32, der für die Übergabeoperation nicht erforderlich ist, kann währenddessen stillstehen. Während die Stapel 2a und 2b auf die Abförderer 3a und 3b überführt werden, werden in der Bereitstellungsstation 1 neue Stapel gebildet, wie es in Figur 2 gezeigt ist.

Sind die Zwischenförderer 26a und 26b jeweils einteilig ausgebildet, wie das in Figur 1 dargestellt ist, so werden die Stapel 2a bei der Betriebsart nach Figur 4, bei der die Stapel aus der Bereitstellungsstation 1 gleichmäßig auf beide Abförderer 3a und 3b verteilt werden, im nächsten Arbeitsschritt zunächst aus dem linken Förderwegabschnitt, in den sie gemäß Figur 4 vom Zangenwagen 12a überführt werden, in den rechten Förderwegabschnitt des Zwischenförderers 26a bewegt, bevor sie dann beim folgenden Arbeitsschritt an den Abgabeförderer 28a abgegeben werden. Das bedeutet, daß die Stapel 2a bei dieser Gestaltung des Zwischenförderers 26a einer zusätzlichen Anhalte- und Beschleunigungsoperation unterworfen werden, die die Gefahr einer Störung der Stapelkonfiguration birgt. Die Stapel 2b hingegen werden bei dieser einteiligen Ausbildung der Zwischenförderer beim nächsten Arbeitsschritt unmittelbar an den Abgabeförderer 28b übergeben und unterliegen dieser zusätzlichen Beanspruchung nicht.

Die Aufteilung mindestens des Zwischenförderers 26a in zwei Teilförderer 29 und 31 hat demgegenüber den Vorteil, daß die vom Teilförderer 29 aus der Übergabeposition des Transfermittels abgegebenen Stapel 2a ohne zusätzlichen Stop auf den Abgabeförderer 28a weitergegeben werden können, wenn der benachbarte Teilförderer 31 wie der Abgabeförderer 28a kontinuierlich angetrieben wird und dadurch praktisch eine Verlängerung des Abgabeförderers 28a bis zum Teilförderer 29 hin darstellt. Die Aufteilung der Zwischenförderer in Teilförderer vermeidet also eine zusätzliche Belastung der Stapel und ist insbesondere dann vorteilhaft, wenn zur Erzielung einer hohen Förderleistung mit hohen Geschwindigkeiten gearbeitet wird.

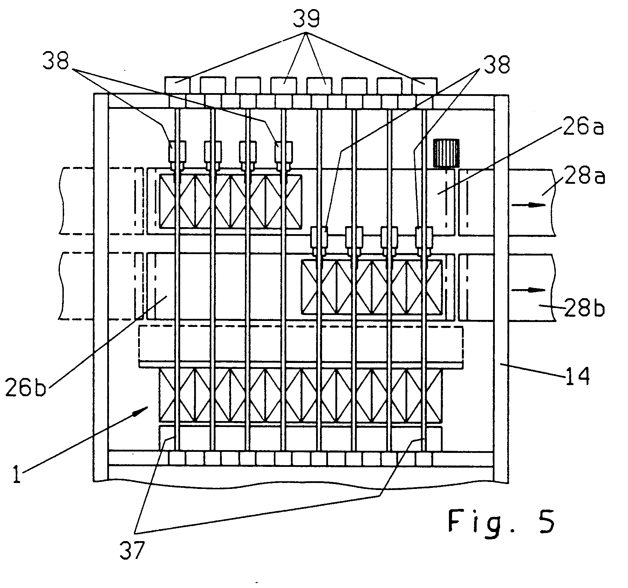

Figur 5 zeigt eine Ausführungsform der Erfindung, bei der alle Zangen 38 einzeln an Führungen 37 geführt und mittels Motoren 39 angetrieben sind. Zum Antrieb der Einzelzangen 38 können beispielsweise kolbenstangenlose Bandzylinder eingesetzt werden, die kommerziell erhältlich sind. Diese Ausführungsform der Erfindung erlaubt eine sehr individuelle Einstellung der Beschickungsraten der beiden Abgabeförderer 28a und 28b. Hiermit ist auch eine Aufteilung der Stapel auf die beiden Abgabeförderer möglich, die von den Verhältnissen 0:1 und 1:1 abweicht. Diese Vorrichtung kann so gesteuert werden, daß der Stapeltransfer auf die Abgabeförderer sehr flexibel auf die unterschiedlichsten Betriebsbedingungen eingestellt werden kann.

In Figur 1 sind für die Zwischenförderer 26a und b getrennte Motoren 27a und b vorgesehen, so daß sie unabhängig voneinander angetrieben werden können. Es ist auch möglich, die Zwischenförderer mit einem einzigen Motor gemeinsam anzutreiben. In den Figuren 3 und 4 sind der besseren Übersichtlichkeit wegen die Antriebe für die Teilförderer 32 und 33 nicht eingezeichnet. Die dargestellte Antriebsgestaltung trägt wesentlich zur großen Flexibilität der Vorrichtung bei und gewährleistet einen schonenden Abtransport der angesammelten Stapel.

## Patentansprüche

1. Vorrichtung zum Überführen von Papierbogenstapeln (2a,2b) von einer Bereitstellungsstation (1) zu wenigstens zwei Abförderern (3a,3b), mit einer Bereitstellungstation (1) mit mehreren nebeneinander angeordneten Stapelplätzen, in der aufeinanderfolgende Reihen von Stapeln für die Überführung bereitgehalten werden, mit wenigstens zwei die Stapel zu Packmaschinen abfördernden Abförderern (3a,3b), mit Fördermitteln (7) zum Beschicken der Bereitstellungsstation (1) mit Stapeln und mit einem Transfermittel (4), das hin- und hergehende Überführungsförderer (12a,12b) zum Transportieren der Stapel aus der Bereitstellungsstation auf die quer zur Förderrichtung der Überführungsförderer verlaufenden Abförderer aufweist, dadurch gekennzeichnet, daß das Transfermittel (4) wenigstens zwei Gruppen aus jeweils in einer Reihe angeordneten Überführungsförderern (18a,18b) aufweist, daß die Gruppen von Überführungsförderern jeweils getrennt steuerber angetrieben sind und daß mit den Gruppen von Überführungsförderern (18a,18b) jeweils Teilreihen aus mehreren dicht an dicht liegenden Stapeln (2a,2b) den zumindest annähernd parallel in die gleiche Richtung fördernden Abförderern (3a,3b) aus der Bereitstellungsstation (1) zuführbar sind.

2. Vorrichtung nach Anspruch 1, dadurch gekennzeichnet, daß die Abförderer (3a,3b) als Förderbänder (26a,26b; 28a,28b) ausgebildet sind.

3. Vorrichtung nach Anspruch 1 und 2, dadurch gekennzeichnet, daß bei einer Störung eines Abförderbandes (26a,26b) die beiden Teilreihen dem ungestörten Abförderband zuführbar sind.

4. Vorrichtung nach einem oder mehreren der vorhergehenden Ansprüche, dadurch gekennzeichnet, daß die Förderrichtung der parallelen Abförderbänder (26a,b; 28a,b) senkrecht zur Förderrichtung der Fördermittel (7) verläuft.

5. Vorrichtung nach einem oder mehreren der vorhergehenden Ansprüche, dadurch gekennzeichnet, daß jeder Abförderer (3a,b) aus wenigstens einem Zwischenförderer (26a,b) und einem an den Zwischenförderer anschließenden, getrennt antreibbaren Abgabeförderer (28a,b) besteht, daß die Zwischenförderer zum Aufnehmen überführter Stapel (2a,b) den Abgabepositionen der Überführungsförderer (12a,b) zugeordnet sind und daß sich die Abgabeförderer zum Abfördern der Stapel außerhalb der Abgabepositionen der Überführungsförderer an die Abgabeenden der Zwischenförderer anschließen.

6. Vorrichtung nach Anspruch 5, dadurch gekennzeichnet, daß jeder Zwischenförderer (26a,b) aus wenigstens zwei getrennt voneinander antreibbaren Teilförderern (29,31,32,33) besteht.

7. Vorrichtung nach einem oder mehreren der vorhergehenden Ansprüche, dadurch gekennzeichnet, daß die Überführungsförderer (12a,b) Zangen (18a,b) zum Fassen der Stapel an der Bereitstellungsstation (1) und zu ihrer Förderung zu den Abgabeförderern (3a,b) aufweisen.

8. Vorrichtung nach Anspruch 7, dadurch gekennzeichnet, daß die Überführungsförderer (12a,b) in Führungen (13) bewegbare und getrennt voneinander antreibbare Zangenwegen (12a,b) aufweisen und daß jeder Zangenwagen eine oder mehrere Zangen (18a,b) zum Erfassen und zeitweiligen Halten zu überführender Stapel (2a,b) trägt.

9. Vorrichtung nach Anspruch 8, dadurch gekennzeichnet, daß jeder Zangenwagen (12a,b) zwischen einer Aufnehmeposition, in der die Zangen (18a,18b) in der Bereitstellungstation (1) bereitgehaltene Stapel (2a,b) ergreifen, und einer Abgabeposition hin und zurück bewegbar ist, in der die Zangen die überführten Stapel auf einen der Abförderer (3a,b) ablegen.

10. Vorrichtung nach Anspruch 9, dadurch gekennzeichnet, daß die Abgabeposition jedes Zangenwagens (12a,b) wahlweise auf jeden Abgabeförderer (3a,b) einstellbar ist.

11. Vorrichtung nach einem oder mehreren der vorhergehenden Ansprüche, dadurch gekennzeichnet, daß dem Transfermittel (4) ein mehrnutziger Bogenförderer (7) einer Produktionseinrichtung zum Herstellen von Papierstapeln (2a,b) vorgeordnet ist.

12. Vorrichtung nach einem oder mehreren der vorhergehenden Ansprüche, dadurch gekennzeichnet, daß die Bereitstellungsstation (1) als mehrnutzige Sammelstation zum Ansammeln nacheinander zugeführter Bogen (8) zu Stapeln (2a,b) ausgebildet ist.

## Claims

1. Apparatus for transferring stacks of paper sheets (2a, 2b) from a standby station (1) to at least two discharge conveyors (3a, 3b), having a standby station (1) with a plurality of stacking locations arranged side by side in which successive rows of stacks are held ready for the transfer, having at least two discharge conveyors (3a, 3b) which discharge the stacks to packaging machines, having conveying means (7) for feeding the standby station (1) with stacks and having a transfer means (4) which has reciprocating transfer conveyors (12a, 12b) for transporting the stacks from the standby station to the discharge conveyors running transversely to the conveying direction of the transfer conveyors, characterised in that the transfer means (4) has at least two groups of transfer conveyors (18a, 18b) each arranged in a row, in that the groups of transfer conveyors are each driven in a separately controllable manner, and in that subrows consisting of a plurality of stacks (2a, 2b) lying close together can each be supplied by the groups of transfer conveyors (18a, 18b) from the standby station (1) to the discharge conveyors (3a, 3b) conveying at least approximately parallel and in the same direction.

2. Apparatus according to Claim 1, characterised in that the discharge conveyors (3a, 3b) are designed as conveying belts (26a, 26b; 28a, 28b).

3. Apparatus according to Claim 1 and 2, characterised in that in the event of a disruption of one discharge-conveying belt (26a, 26b) the two subrows can be supplied to the discharge-conveying belt which is not disrupted.

4. Apparatus according to one or more of the preceding claims, characterised in that the conveying direction of the parallel discharge-conveying belts (26a,b; 28a,b) runs perpendicular to the conveying direction of the conveying means (7).

5. Apparatus according to one or more of the preceding claims, characterised in that each discharge conveyor (3a,b) comprises at least one intermediate conveyor (26a,b) and one separately drivable delivery conveyor (28a,b) following the intermediate conveyor, in that the intermediate conveyors are assigned to the delivery positions of the transfer conveyors (12a,b) for the purpose of receiving transferred stacks (2a,b), and in that the delivery conveyors adjoin the delivery ends of the intermediate conveyors outside the delivery positions of the transfer conveyors for the purpose of discharging the stacks.

6. Apparatus according to Claim 5, characterised in that each intermediate conveyor (26a,b) comprises at least two subconveyors (29, 31, 32, 33) drivable separately from one another.

7. Apparatus according to one or more of the preceding claims, characterised in that the transfer conveyors (12a,b) have grippers (18a,b) for grasping the stacks at the standby station (1) and for conveying them to the delivery conveyors (3a,b).

8. Apparatus according to Claim 7, characterised in that the transfer conveyors (12a,b) have gripper carriages (12a,b) movable in guides and drivable separately from one another, and in that each gripper carriage carries one or more grippers (18a,b) for grasping and temporarily holding stacks (2a,b) to be transferred.

9. Apparatus according to Claim 8, characterised in that each gripper carriage (12a,b) is movable back and forth between a pick-up position in which the grippers (18a, 18b) grasp stacks (2a,b) held ready in the standby station (1) and a delivery position in which the grippers deposit the transferred stacks on one of the discharge conveyors (3a,b).

10. Apparatus according to Claim 9, characterised in that the delivery position of each gripper carriage (12a,b) is selectively adjustable to each delivery conveyor (3a,b).

11. Apparatus according to one or more of the preceding claims, characterised in that a multi-copy sheet conveyor (7) of a production installation for producing stacks of paper (2a,b) is arranged in front of the transfer means (4).

12. Apparatus according to one or more of the preceding claims, characterised in that the standby station (1) is designed as a multi-copy collecting station for gathering together successively supplied sheets (8) to form stacks (2a,b).

## Revendications

1. Dispositif pour transférer des piles de feuilles de papier (2a, 2b) d'une station de mise à disposition (1) vers au moins deux évacuateurs (3a, 3b), avec une station de mise à disposition (1) comportant plusieurs places d'empilage disposées côte-à-côte, dans lesquelles des rangées successives de piles sont maintenues à disposition pour le transfert, avec au moins deux évacuateurs (3a, 3b) qui évacuent les piles vers des machines d'emballage, avec des moyens d'acheminement (7) pour charger la station de mise à disposition (1) avec des piles et avec un moyen de transfert (4) qui présente des transporteurs de transfert à mouvement de va-et-vient (12a, 12b) pour le transport des piles de la station de mise à disposition jusqu'aux évacuateurs qui s'étendent transversalement à la direction de transport des transporteurs de transfert, caractérisé en ce que le moyen de transfert (4) présente au moins deux groupes de transporteurs de transfert (18a, 18b) disposés à chaque fois en une rangée, en ce que les groupes de transporteurs de transfert sont entraînés chacun séparément en pouvant être commandés et en ce que des rangées partielles, constituées de plusieurs piles (2a, 2b) serrées l'une contre l'autre, peuvent être respectivement amenées, à l'aide des groupes de transporteurs de transfert (18a, 18b), à partir de la station de mise à disposition (1), aux évacuateurs (3a, 3b) qui progressent au moins approximativement parallèlement dans la même direction.

2. Dispositif selon la revendication 1, caractérisé en ce que les évacuateurs (3a, 3b) sont réalisés sous la forme de bandes transporteuses (26a, 26b ; 28a, 28b).

3. Dispositif selon la revendication 1 et 2, caractérisé en ce que, dans le cas d'une panne d'une bande d'évacuation (26a, 26b), les deux rangées partielles peuvent être amenées à la bande d'évacuation qui n'est pas en panne.

4. Dispositif selon une ou plusieurs des revendications précédentes, caractérisé en ce que la direction de transport des bandes d'évacuation parallèles (26a, b ; 28a, b) est perpendiculaire à la direction de transport des moyens d'acheminement (7).

5. Dispositif selon une ou plusieurs des revendications précédentes, caractérisé en ce que chaque évacuateur (3a, b) est constitué par au moins un transporteur intermédiaire (26a, b) et un transporteur de sortie (28a, b), qui suit immédiatement le transporteur intermédiaire et qui peut être entraîné de manière séparée, en ce que les transporteurs intermédiaires, pour recevoir des piles transférées (2a, b), sont associés aux positions de distribution des transporteurs de transfert (12a, b) et en ce que les transporteurs de sortie pour l'évacuation des piles en dehors des positions de distribution des transporteurs de transfert, sont contigus aux extrémités de sortie des transporteurs intermédiaires.

6. Dispositif selon la revendication 5, caractérisé en ce que chaque transporteur intermédiaire (26a, b) est constitué par au moins deux transporteurs partiels (29, 31, 32, 33) qui peuvent être entraînés séparément l'un de l'autre.

7. Dispositif selon une ou plusieurs des revendications précédentes, caractérisé en ce que les transporteurs de transfert (12a, b) présentent des pinces (18a, b) pour saisir les piles à la station de mise à disposition (1) et pour les acheminer vers les transporteurs de sortie (3a, b).

8. Dispositif selon la revendication 7, caractérisé en ce que les transporteurs de transfert (12a, b) présentent des chariots à pinces (12a, b) déplaçables dans des guides (13) et pouvant être entraînés séparément l'un de l'autre, et en ce que chaque chariot à pinces porte une ou plusieurs pinces (18a, b) pour saisir et tenir momentanément des piles à transférer (2a, b).

9. Dispositif selon la revendication 8, caractérisé en ce que chaque chariot à pinces (12a, b) est déplaçable en va-et-vient entre une position de réception, dans laquelle les pinces (18a, 18b) saisissent des piles (2a, b) maintenues à disposition dans la station de mise à disposition (1), et une position de distribution dans laquelle les pinces déposent les piles transférées sur l'un des évacuateurs (3a, b).

10. Dispositif selon la revendication 9, caractérisé en ce que la position de distribution de chaque chariot à pinces (12a, b) est réglable au choix sur chacun des transporteurs de sortie (3a, b).

11. Dispositif selon une ou plusieurs des revendications précédentes, caractérisé en ce qu'un transporteur de feuilles (7) à usage multiple d'un dispositif de production pour confectionner des piles de papiers (2a, b), est placé en amont du moyen de transfert (4).

12. Dispositif selon une ou plusieurs des revendications précédentes, caractérisé en ce que la station de mise à disposition (1) est conçue sous forme d'une station collectrice à usage multiple pour rassembler des feuilles (8), amenées l'une après l'autre, en piles (2a, b).
